# EUROPÄISCHE PATENTANMELDUNG

(11) **EP 4 741 178 A1**
(43) Veröffentlichungstag der Anmeldung: **13.05.2026**
(21) Anmeldenummer: 25206830.9
(22) Anmeldetag: 06.10.2025
(51) Int. Cl.: B60C 11/11, B60C 11/12, B60C 11/03

(54) **FAHRZEUGREIFEN**

(30) Priorität: 07.11.2024 DE 102024210717
(71) Anmelder: Continental Reifen Deutschland GmbH, 30175 Hannover (DE)
(72) Erfinder: Berger, Christoph, 30175 Hannover (DE); Seng, Matthias, 30175 Hannover (DE); Wiese, Klaus, 30175 Hannover (DE)
(74) Vertreter: Continental Corporation

(57) **Zusammenfassung**

Fahrzeugreifen mit einem profilierten Laufstreifen mit einer Laufstreifenperipherie und mit einer vom Niveau der Laufstreifenperipherie ermittelten Profiltiefe und mit Profilblöcken (1), welche von jeweils mindestens zwei sich unter einem Winkel ≤ 50° zur axialen Richtung des Laufstreifens erstreckenden Einschnitten (2) durchquert sind, welche den jeweiligen Profilblock in randseitige Blocksegmente (3, 3') und zumindest ein mittleres Blocksegment mit Außenflächen (3a, 3'a, 3"a) auf unterschiedlichen Niveaus gliedern, entweder auf einem am Niveau der Laufstreifenperipherie befindlichen ersten Niveau oder auf zumindest einem weiteren von diesem Niveau abweichenden Niveau.

Sämtliche Blocksegmente (3, 3', 3") weisen parallel zueinander verlaufende Außenflächen (3a, 3'a, 3"a) auf, wobei jedes Blocksegment (3, 3', 3") mit einer Außenfläche (3a, 3'a, 3"a), welche sich auf einem weiteren Niveau befindet, gegenüber einem Blocksegment (3, 3', 3") mit einer Außenfläche (3a, 3'a, 3"a), welche sich auf dem Niveau der Laufstreifenperipherie befindet, angehoben ist, wobei die Höhendifferenz (d₁) der Außenflächen (3a, 3'a, 3"a) in radialer Richtung 0,20 mm bis 0,60 mm beträgt.

## Beschreibung

Die Erfindung betrifft einen Fahrzeugreifen mit einem profilierten Laufstreifen mit einer Laufstreifenperipherie und mit der vom Niveau der Laufstreifenperipherie ermittelten Profiltiefe und mit Profilblöcken, welche in Umfangsrichtung voneinander durch Rillen getrennt sind und von jeweils mindestens zwei sich unter einem Winkel ≤ 50° zur axialen Richtung des Laufstreifens erstreckenden Einschnitten durchquert sind, welche eine Breite von 0,40 mm bis 1,20 mm aufweisen und den jeweiligen Profilblock in den Rillen benachbarte randseitige Blocksegmente und zumindest ein mittleres Blocksegment mit Außenflächen auf unterschiedlichen Niveaus gliedern, entweder auf einem am Niveau der Laufstreifenperipherie befindlichen ersten Niveau oder auf zumindest einem weiteren von diesem Niveau abweichenden Niveau.

Ein derartiger Fahrzeugreifen ist aus der WO 2022/253370 A1 bekannt. Dieser Fahrzeugreifen weist einen Laufstreifen auf, welcher mit Profilblöcken versehen ist, die durch Einschnitte in Blocksegmente gegliedert sind. Zumindest ein zwischen zwei Einschnitten befindliches Blocksegment ist an der Außenfläche unmittelbar an die beiden Einschnitte anschließend mit über die Erstreckung des Blocksegments verlaufenden Rippen versehen, welche ein Plateau mit einer Breite von 0,10 mm bis 0,40 mm und gegenüber dem Niveau der Laufstreifenperipherie eine Höhe von 0,20 mm bis 0,70 mm aufweisen. Zwischen den beiden Rippen befindet sich eine bis auf das Niveau der Laufstreifenperipherie abfallende, konkav gerundete Rippenflanke. Die auf den Blocksegmenten ausgebildeten Rippen sollen eine Sägezahnstruktur zur Verfügung stellen, welche auf schneebedeckten und eisbedeckten Fahrbahnen für effektive Kanten- und Wischeffekte sorgen. Diese bekannte Rippenstruktur auf der Außenfläche von Profilblöcken neigt beim Abrollen des Reifens am Untergrund zu Verformungen und reibt sich auf festem Untergrund schnell ab, sodass ihre Wirkung begrenzt und von kurzer Dauer ist.

Der Erfindung liegt die Aufgabe zugrunde, bei einem Fahrzeugreifen der eingangs genannten Art Blocksegmente derart zu gestalten, dass sie auf festem Untergrund wesentlich geringer zu Verformungen neigen, sodass das Traktionsvermögen auf weichem Untergrund, insbesondere auf Schnee bzw. schneebedeckten Fahrbahnen, dauerhaft gut erhalten bleibt.

Gelöst wird die gestellte Aufgabe erfindungsgemäß dadurch, dass sämtliche Blocksegmente parallel zueinander verlaufende Außenflächen aufweisen, wobei jedes Blocksegment mit einer Außenfläche, welche sich auf einem weiteren Niveau befindet, gegenüber einem Blocksegment mit einer Außenfläche, welche sich auf dem Niveau der Laufstreifenperipherie befindet, angehoben ist, wobei die Höhendifferenz der Außenflächen in radialer Richtung 0,20 mm bis 0,60 mm beträgt.

Mit gemäß der Erfindung angehobenen Blocksegmenten bleibt die Blocksteifigkeit erhalten, da sich die angehobenen Blocksegmente beim Abrollen auf festem Untergrund, unter Belastung, nicht bzw. kaum verformen, wobei gleichzeitig besonders wirksame Kanten zur Verbesserung des Traktionsvermögens, insbesondere auf Schnee bzw. schneebedecktem Untergrund, länger erhalten bleiben.

Bei einer bevorzugten Ausführung beträgt die Höhendifferenz der Außenflächen in radialer Richtung bis 0,40 mm.

Je nachdem ob der Laufstreifen ein laufrichtungsgebundenes oder ein nicht laufrichtungsgebundenes Profil aufweist, sind bestimmte Anordnungen des angehobenen Blocksegments besonders vorteilhaft.

Bei einer dieser Ausführungsvarianten, die insbesondere für einen nicht laufrichtungsgebundenen Laufstreifen vorteilhaft ist, sind im Laufstreifen Profilblöcke vorhanden, in welchen zumindest ein mittleres Blocksegment ein angehobenes Blocksegment ist.

Bei einer weiteren, insbesondere für laufrichtungsgebundenes Laufstreifen besonders geeigneten Ausführung sind im Laufstreifen Profilblöcke vorhanden, in welchen zumindest ein randseitiges Blocksegment ein angehobenes Blocksegment ist.

Bei einer Ausführung, bei welcher im Laufstreifen Profilblöcke vorhanden sind, die von zwei Einschnitten durchquert sind, wobei ein einziges Blocksegment angehoben ist, ist dieses entweder das mittlere Blocksegment oder eines der randseitigen Blocksegmente angehoben.

In Fahrzeugreifen mit Laufstreifen, die für das Fahren auf winterliche Fahrbahnen, insbesondere auf Schnee oder Eis besonders geeignet sind, sind im Laustreifen meist Profilblöcke vorhanden, welche von mehr als zwei Einschnitten durchquert sind. Bei derartigen Profilblöcken können vorteilhafterweise die beiden randseitigen Blocksegmente Außenflächen auf dem Niveau der Laufstreifenperipherie aufweisen und es können die weiteren Blocksegmente angehoben sein.

In derartigen Laufstreifen können auch Profilblöcke vorhanden sein, welche von zumindest vier Einschnitten durchquert sind. Für eine besonders gute Traktionsperformance ist es bei derartigen Profilblöcken von Vorteil, wenn zumindest zwei mittlere Blocksegmente angehoben sind und die sonstigen Blocksegmente Außenflächen auf dem Niveau der Laufstreifenperipherie aufweisen. Für eine gleichmäßige Blocksteifigkeit ist es von Vorteil, wenn in diesem Fall die mittleren Blocksegmente gleichermaßen, daher auf das gleiche Niveau, angehoben sind.

Einer weiteren vorteilhaften und bevorzugten Ausführungsform sind im Lauf Streifen Profilblöcke vorhanden, welche von zumindest vier Einschnitten durchquert sind, wobei die beiden randseitigen Blocksegmente Außenflächen auf dem Niveau der Laufstreifenperipherie aufweisen und die weiteren, jeweils an ein randseitiges Blocksegment anschließenden Blocksegmente derart angehoben sind, dass die Höhendifferenz ihre Außenflächen schrittweise bis zu einem oder dem mittleren Blocksegment zunimmt.

Insbesondere in Laufstreifen von Fahrzeugreifen, die für das Fahren unter winterlichen Fahrbedingungen vorgesehen und geeignet sind, sind oft im Laufs so treifen Profilblöcke vorhanden, welche von zumindest fünf Einschnitten durchquert sind, wobei die beiden randseitigen Blocksegmente und jeweils zumindest das an dieses anschließende Blocksegment Außenflächen auf dem Niveau der Laufstreifenperipherie aufweisen und wobei das bzw. die weiteren Blocksegment(e) angehoben ist bzw. sind.

Weitere Merkmale, Vorteile und Einzelheiten der Erfindung werden nun anhand der Zeichnung, die schematisch Ausführungsbeispiele zeigt, näher beschrieben. Dabei zeigen
Figur 1 eine Schrägansicht eines Profilblocks eines Laufstreifens eines Fahrzeugreifens,
Figur 2 eine vergrößerte Schnittdarstellung entlang der durch die Linie II-II gekennzeichneten Schnittebene der Figur 1 und
die Figuren 3 bis 7 weitere Ausführungsvarianten der Erfindung in zu Figur 2 analogen Schnittdarstellungen.

Gemäß der Erfindung ausgeführte Fahrzeugreifen sind Reifen für Kraftfahrzeuge, insbesondere für mehrspurige Kraftfahrzeuge, vorzugsweise Reifen in Radialbauart für Nutzfahrzeuge, Personenkraftwagen, Vans oder Light-Trucks. Darüber hinaus sind gemäß der Erfindung ausgeführte Fahrzeugreifen bevorzugt Fahrzeugluftreifen, insbesondere Sommer- Winter - oder Ganzjahresreifen, besonders bevorzugt Reifen, die für den Einsatz unter winterlichen Fahrbedingungen, demnach auf schneebedeckten Fahrbahnen, vorgesehen sind.

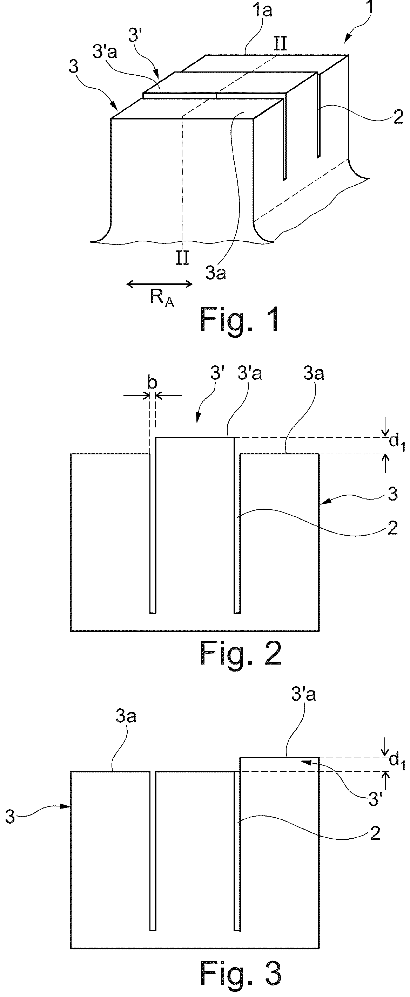

Figur 1 zeigt eine Schrägansicht eines Profilblocks 1 eines Laufstreifens eines Fahrzeugreifens. Der Profilblock 1 gehört beispielsweise zu einer in Umfangsrichtung des Laufstreifens umlaufenden mittigen Profilblockreihe. Innerhalb einer solchen Profilblockreihe sind die einzelnen Profilblöcke 1 durch Rillen voneinander getrennt und seitlich von Umfangsrillen begrenzt.

Fig. 1 und die Schnittdarstellungen in Fig. 2 bis Fig. 7 zeigen jeweils einen Profilblock 1 mit Blockkanten 1a zu den nicht dargestellten Rillen, die insbesondere Querrillen oder Schrägrillen sind, und mit mehreren parallel zueinander und in den Beispielen gerade verlaufenden Einschnitten 2, die den Profilblock 1 durchqueren und an dessen Außenfläche eine Breite b aufweisen, die 0,40 mm bis 1,20 mm beträgt. Die Einschnitte 2 können über ihren Verlauf Abschnitte mit unterschiedlicher Tiefe aufweisen, wobei die größte Tiefe der Einschnitte 2 bis zu 90 % der im jeweiligen Laufstreifen vorgesehenen Profiltiefe (die maximale Tiefe der Hauptentwässerungsrillen bei neuem Reifen) und wobei die geringste Tiefe der Einschnitte 2 30 % der Profiltiefe beträgt. Die Einschnitte 2 sind innerhalb des Profilblocks 1 derart angeordnet, dass sie in den dargestellten Beispielen zu den Blockkanten 1a und zueinander zumindest im Wesentlichen gleich beabstandet sind. Bei alternativen Ausführungen verlaufen die Einschnitte 2 in Draufsicht wellen- oder zickzack förmig. Zur axialen Richtung R_{A} (Fig. 1) erstrecken sich die Einschnitte 2 unter einem Winkel von 0° bis 50°.

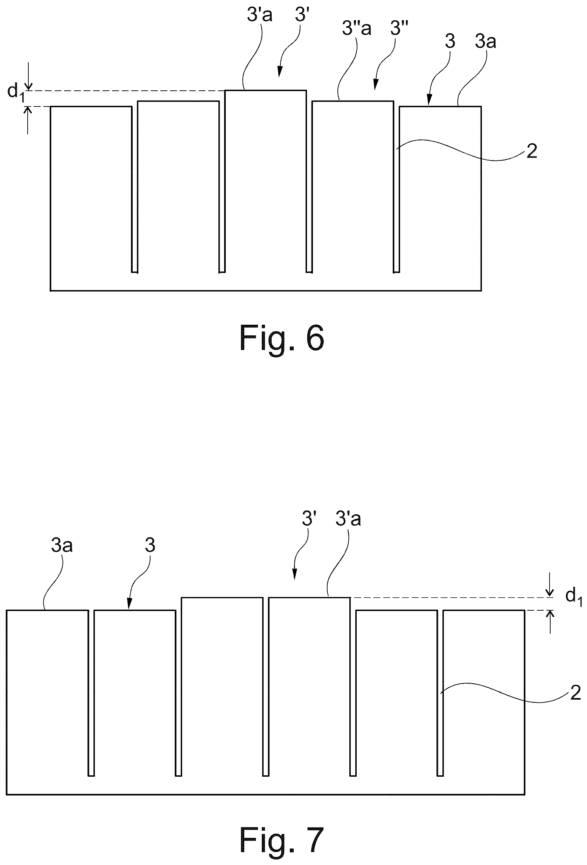

Die Einschnitte 2 gliedern den jeweiligen Profilblock 1 in Blocksegmente 3, 3' (Fig. 1 bis 5 und 7) sowie 3, 3'und 3" (Fig. 6) mit Außenflächen 3a, 3'a, 3"a, welche, sämtlich parallel zueinander verlaufen. Die Außenflächen 3a der Blocksegmente 3 befinden sich auf dem Niveau der Laufstreifenperipherie, von welcher aus die Profiltiefe ermittelt ist.

Bei sämtlichen Ausführungsbeispiele ist ferner zumindest ein Blocksegment 3', 3" vorhanden, welches gegenüber dem Blocksegment 3 bzw. den Blocksegmenten 3, welches bzw. welche sich auf dem Niveau der Laufstreifenperipherie befinden, angehoben ist und dessen Außenflächen 3'a, 3"a gegenüber der Außenfläche 3a des/der auf dem Niveau der Laufstreifenperipherie befindlichen Blocksegments 3 bzw. Blocksegmente 3 in radialer Richtung eine Höhendifferenz d₁ von 0,20 mm bis 0,60 mm, insbesondere bis zu 0,40 mm, aufweist.

Bei der in Fig. 1 und Fig. 2 gezeigten Ausführungsvariante ist der Profilblock 1 von zwei Einschnitten 2 durchquert und weist ein mittleres angehobenes Blocksegment 3' und zwei randseitige Blocksegmente 3 mit Außenflächen 3a auf dem Niveau der Laufstreifenperipherie auf. Fig. 3 zeigt ebenfalls eine Ausführungsform eines Profilblocks 1 mit zwei parallel zueinander verlaufenden Einschnitten 2, wobei das eine randseitige Blocksegment ein angehobenes Blocksegment 3' ist, die beiden weiteren Blocksegmente 3 weisen Außenflächen auf dem Niveau der Laufstreifenperipherie auf.

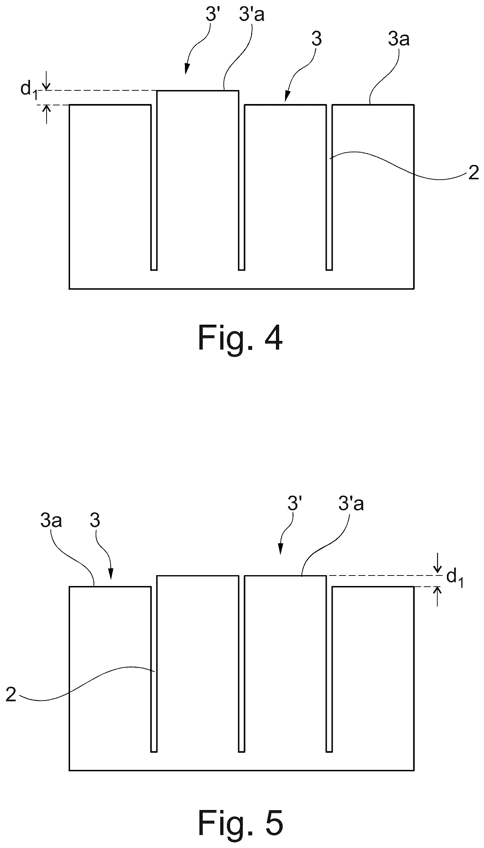

Fig. 4 und Fig. 5 zeigen Ausführungsvarianten mit drei Einschnitten 2 und daher vier Blocksegmenten. In Fig. 4 weist der Profilblock 1 bei jeder Blockkante 1a ein Blocksegment 3 auf, wobei an eines dieser Blocksegmente 3 ein weiteres Blocksegment 3 anschließt. Das vierte zwischen zwei Blocksegmenten 3 befindliche Blocksegment 3' ist angehoben. Der in Fig. 5 dargestellte Profilblock 1 weist zwei mittlere angehobene Blocksegmente 3' und randseitig je ein Blocksegment 3 auf.

Fig.6 zeigt eine Ausführungsvariante mit vier Einschnitten 2 und daher fünf Blocksegmenten, an den beiden Blockkanten 1a je ein randseitiges Blocksegment 3 und zwischen diesen drei angehobene Blocksegmente 3', 3". Es erfolgt eine Anhebung der Blocksegmente 3', 3" in Stufen, sodass das mittlere Blocksegment 3' am weitesten angehoben ist und die beiden zwischen den randseitigen Blocksegmenten 3 und dem mittleren Blocksegment 3' befindlichen Blocksegmente 3" geringer angehoben sind als das mittlere Blocksegment 3'.

Bei der in Fig. 7 dargestellten Ausführungsform sind im Profilblock 1 fünf parallel zueinander verlaufende Einschnitte 2 ausgebildet und daher sechs Blocksegmente 3, 3' vorhanden. Die beiden mittleren Blocksegmente 3' sind angehoben, die vier weiteren sind Blocksegmente 3 mit Außenflächen 3a auf dem Niveau der Laufstreifenperipherie.

### Bezugsziffernliste

- 1: Profilblock
- 1a: Blockkante
- 2: Einschnitt
- 3, 3', 3": Blocksegment
- 3a, 3'a, 3"a: Außenfläche
- b: Breite
- d₁: Höhendifferenz
- R_{A}: axiale Richtung

## Patentansprüche

1. Fahrzeugreifen mit einem profilierten Laufstreifen mit einer Laufstreifenperipherie und mit einer vom Niveau der Laufstreifenperipherie ermittelten Profiltiefe und mit Profilblöcken (1), welche in Umfangsrichtung voneinander durch Rillen getrennt sind und von jeweils mindestens zwei sich unter einem Winkel ≤ 50° zur axialen Richtung des Laufstreifens erstreckenden Einschnitten (2) durchquert sind, welche eine Breite (b) von 0,40 mm bis 1,20 mm aufweisen und den jeweiligen Profilblock (1) in den Rillen benachbarte randseitige Blocksegmente (3, 3') und zumindest ein mittleres Blocksegment (3', 3") mit Außenflächen (3a, 3'a, 3"a) auf unterschiedlichen Niveaus gliedern, entweder auf einem am Niveau der Laufstreifenperipherie befindlichen ersten Niveau oder auf zumindest einem weiteren von diesem Niveau abweichenden Niveau,
**dadurch gekennzeichnet,**
**dass** sämtliche Blocksegmente (3, 3', 3") parallel zueinander verlaufende Außenflächen (3a, 3'a, 3"a) aufweisen, wobei jedes Blocksegment (3, 3', 3") mit einer Außenfläche (3a, 3'a, 3"a), welche sich auf einem weiteren Niveau befindet, gegenüber einem Blocksegment (3, 3', 3") mit einer Außenfläche (3a, 3'a, 3"a), welche sich auf dem Niveau der Laufstreifenperipherie befindet, angehoben ist, wobei die Höhendifferenz (d₁) der Außenflächen (3a, 3'a, 3"a) in radialer Richtung 0,20 mm bis 0,60 mm beträgt.

2. Fahrzeugreifen nach Anspruch 1, **dadurch gekennzeichnet, dass** die Höhendifferenz (d₁) der Außenflächen (3a, 3'a, 3"a) in radialer Richtung bis 0,40 mm beträgt.

3. Fahrzeugreifen nach Anspruch 1 oder 2, **dadurch gekennzeichnet, dass** im Laufstreifen Profilblöcke (1) vorhanden sind, in welchen zumindest ein mittleres Blocksegment (3a, 3'a, 3"a) ein angehobenes Blocksegment ist.

4. Fahrzeugreifen nach einem der Ansprüche 1 bis 3, **dadurch gekennzeichnet, dass** im Laufstreifen Profilblöcke (1) vorhanden sind, in welchen zumindest ein randseitiges Blocksegment (3, 3') ein angehobenes Blocksegment ist.

5. Fahrzeugreifen nach einem der Ansprüche 1 bis 4, **dadurch gekennzeichnet, dass** im Laufstreifen Profilblöcke (1) vorhanden sind, welche von zwei Einschnitten (2) durchquert sind, wobei ein einziges Blocksegment (3, 3') angehoben ist, welches entweder das mittlere oder eines der randseitigen Blocksegmente ist.

6. Fahrzeugreifen nach einem der Ansprüche 1 bis 4, **dadurch gekennzeichnet, dass** im Laufstreifen Profilblöcke (1) vorhanden sind, welche von mehr als zwei Einschnitten (2) durchquert sind, wobei die beiden randseitigen Blocksegmente (3) Außenflächen (3a) auf dem Niveau der Laufstreifenperipherie aufweisen und die weiteren Blocksegmente (3', 3") angehoben sind.

7. Fahrzeugreifen nach einem der Ansprüche 1 bis 4 oder 6, **dadurch gekennzeichnet, dass** im Laufstreifen Profilblöcke (1) vorhanden sind, welche von zumindest vier Einschnitten (2) durchquert sind, wobei zumindest zwei mittlere Blocksegmente (3') angehoben sind und die sonstigen Blocksegmente (3) Außenflächen (3a) auf dem Niveau der Laufstreifenperipherie aufweisen.

8. Fahrzeugreifen nach Anspruch 7, **dadurch gekennzeichnet, dass** die zwei mittleren Blocksegmente (3') gleichermaßen angehoben sind.

9. Fahrzeugreifen nach einem der Ansprüche 1 bis 4 oder 6 bis 8, **dadurch gekennzeichnet, dass** im Laufstreifen Profilblöcke (1) vorhanden sind, welche von zumindest vier Einschnitten (2) durchquert sind, wobei die beiden randseitigen Blocksegmente (3) Außenflächen (3a) auf dem Niveau der Laufstreifenperipherie aufweisen und die weiteren, jeweils an ein randseitiges Blocksegment (3) anschließenden Blocksegmente (3', 3") derart angehoben sind, dass die Höhendifferenz ihrer Außenflächen (3'a, 3"a) schrittweise bis zu einem oder dem mittleren Blocksegment (3') zunimmt.

10. Fahrzeugreifen nach einem der Ansprüche 1 bis 4 oder 6 bis 8, **dadurch gekennzeichnet, dass** im Laufstreifen Profilblöcke (1) vorhanden sind, welche von zumindest fünf Einschnitten (2) durchquert sind, wobei die beiden randseitigen Blocksegmente (3) und jeweils zumindest das an dieses anschließende Blocksegment (3) Außenflächen (3a) auf dem Niveau der Laufstreifenperipherie aufweisen und das/die weitere(n) Blocksegment(e) (3') angehoben ist bzw. sind.
